# EUROPEAN PATENT APPLICATION

(11) **EP 4 252 511 A1**
(43) Date of publication of application: **04.10.2023**
(21) Application number: 23162531.0
(22) Date of filing: 17.03.2023
(51) Int. Cl.: A01B 69/04, G05D 1/02

(54) **AUTOMATIC RUN METHOD, AUTOMATIC RUN SYSTEM, AND AUTOMATIC RUN PROGRAM**

(30) Priority: 31.03.2022 JP 2022059518
(71) Applicant: Yanmar Holdings Co., Ltd., Osaka-shi, Osaka (JP)
(72) Inventor: MIYAMOTO, Shinnosuke, Okayama (JP); IWAMURA, Keisuke, Okayama (JP)
(74) Representative: Novagraaf International SA

(57) **Abstract**

[Problem] To provide an automatic run method, an automatic run system, and an automatic run program that can maintain a work accuracy even when a positioning method of a work vehicle is switched.

[Solution] A positioning processing unit 181 positions a position of a work vehicle 10 by a given positioning method based on a satellite signal received from a satellite 20. A run processing unit 111 causes the work vehicle 10 to automatically run based on position information showing the work vehicle 10's position positioned by the positioning processing unit 181. Further, the run processing unit 111 prohibits the automatic run, when the work vehicle 10 is ready for the automatic run by a first positioning method, and when the positioning method is switched to a second positioning method which is different in positioning accuracy from the first positioning method.

## Description

### TECHNICAL FIELD

The present invention relates to an automatic run method, an automatic run system, and an automatic run program capable of causing a work vehicle to run.

### BACKGROUND ART

When an obstacle such as windbreak, building, etc. is present near a work vehicle automatically running, it is impossible to receive a radio signal from a satellite, or impossible to receive a signal from the given number of satellites due to a radio interference or the like, thereby, as the case may be, causing a positioning failure. When the positioning failure should be caused, the work vehicle stops automatically running, causing a problem of deteriorated work efficiency.

Conventionally, there has been proposed a system that, in the event of the positioning failure, causes the work vehicle to automatically run by an inertial navigation thereby to avoid stopping the work vehicle (see, for example, Patent Document 1).

### PRIOR ART DOCUMENT

### PATENT DOCUMENT

Patent Document 1: International Publication No. WO 2015/147111

### SUMMARY OF INVENTION

### TECHNICAL PROBLEM

By the way, the positioning methods used for positioning the work vehicle include the DGNSS (Differential Global Navigation Satellite System) method, the real-time kinematic method (RTK-GPS method, hereinafter referred to as "RTK method") which is higher in positioning accuracy than the DGNSS method, and the like. The DGNSS method and the RTK method have positioning accuracies different from each other; thus, when a work vehicle is switched to the RTK method when automatically running while performing the positioning by the DGNSS method, for example, the work vehicle's self-recognized position between before and after the switching of the positioning method is significantly shifted. This causes the work vehicle to follow a target route immediately after the switching of the positioning method, resulting in a problem of unstable behavior of the work vehicle, leading to a deteriorated work accuracy.

An object of the present invention is to provide an automatic run method, an automatic run system, and an automatic run program that can maintain a work accuracy even when a positioning method of a work vehicle is switched.

### SOLUTION TO PROBLEM

An automatic run method according to the present invention includes: positioning a position of a work vehicle by a given positioning method based on a satellite signal received from a satellite; causing the work vehicle to automatically run based on position information showing the work vehicle's positioned position; and making the automatic run prohibitable, when the work vehicle is ready for the automatic run by a first positioning method, and when the positioning method is switched to a second positioning method which is different in positioning accuracy from the first positioning method.

An automatic run system according to the present invention includes: a positioning processing unit; and a run processing unit. The positioning processing unit positions a position of a work vehicle by a given positioning method based on a satellite signal received from a satellite. The run processing unit causes the work vehicle to automatically run based on position information showing the work vehicle's position positioned by the positioning processing unit. Further, the run processing unit is capable of prohibiting the automatic run, when the work vehicle is ready for the automatic run by a first positioning method, and when the positioning method is switched to a second positioning method which is different in positioning accuracy from the first positioning method.

An automatic run program according to the present invention is an automatic run program for causing one or more processors to execute operations including: positioning a position of a work vehicle by a given positioning method based on a satellite signal received from a satellite; causing the work vehicle to automatically run based on position information showing the work vehicle's positioned position; and making the automatic run prohibitable, when the work vehicle is ready for the automatic run by a first positioning method, and when the positioning method is switched to a second positioning method which is different in positioning accuracy from the first positioning method.

### ADVANTAGEOUS EFFECTS OF INVENTION

The present invention can provide an automatic run method, an automatic run system, and an automatic run program that can maintain a work accuracy even when a positioning method of a work vehicle is switched.

### BRIEF DESCRIPTION OF DRAWINGS

Fig. 1 is a block diagram showing a configuration of a work vehicle according to an embodiment of the present invention.
Fig. 2 is an external view showing an example of the work vehicle according of the embodiment of the present invention.
Fig. 3 is an external view showing an example of an operation unit according to the embodiment of the present invention.
Fig. 4 is a view showing an example of a target route of the work vehicle according to the embodiment of the present invention.
Fig. 5A is a diagram showing an example of a setting screen displayed on the operation unit according to the embodiment of the present invention.
Fig. 5B is a diagram showing an example of the setting screen displayed on the operation unit according to the embodiment of the present invention.
Fig. 6A is a diagram for describing a run method of an automatic run in the work vehicle according to the embodiment of the present invention.
Fig. 6B is a diagram for describing the run method of the automatic run in the work vehicle according to the embodiment of the present invention.
Fig. 6C is a diagram for describing the run method of the automatic run in the work vehicle according to the embodiment of the present invention.
Fig. 7A is a diagram showing an example of an operation screen displayed on the operation unit according to the embodiment of the present invention.
Fig. 7B is a diagram showing an example of the operation screen displayed on the operation unit according to the embodiment of the present invention.
Fig. 8A is a diagram showing the automatic run method of the work vehicle according to a first configuration example of the present invention.
Fig. 8B a diagram showing the automatic run method of the work vehicle according to the first configuration example of the present invention.
Fig. 9A a diagram showing the automatic run method of the work vehicle according to a second configuration example of the present invention.
Fig. 9B a diagram showing the automatic run method of the work vehicle according to the second configuration example of the present invention.
Fig. 10 is a diagram showing an example of the automatic run method of the work vehicle according to a third configuration example of the present invention.
Fig. 11 is a flowchart showing an example of a procedure of an automatic run processes executed by the automatic run system according to the embodiment of the present invention.
Figs. 12A to 12C are a diagram showing the automatic run method of the work vehicle according to another embodiment of the present invention.

### DESCRIPTION OF EMBODIMENTS

The following embodiments are each an example of embodying the present invention, and are not intended to limit the technical scope of the present invention.

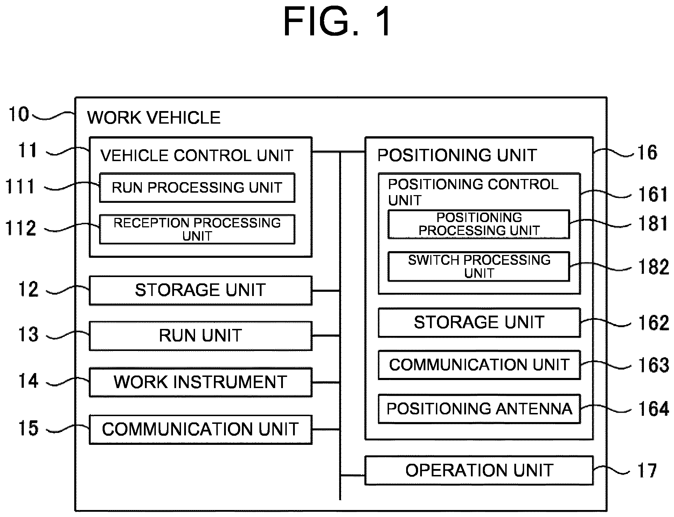

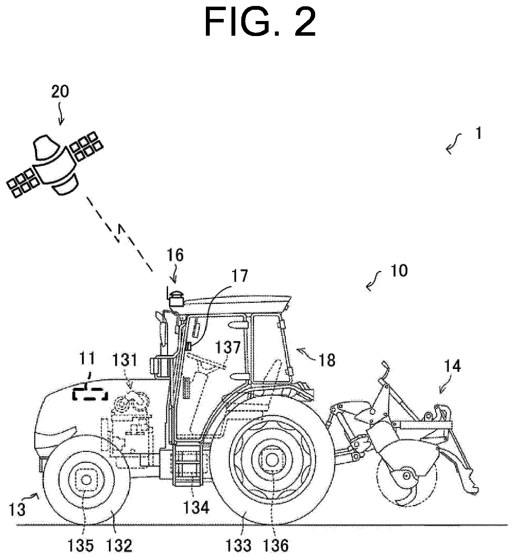

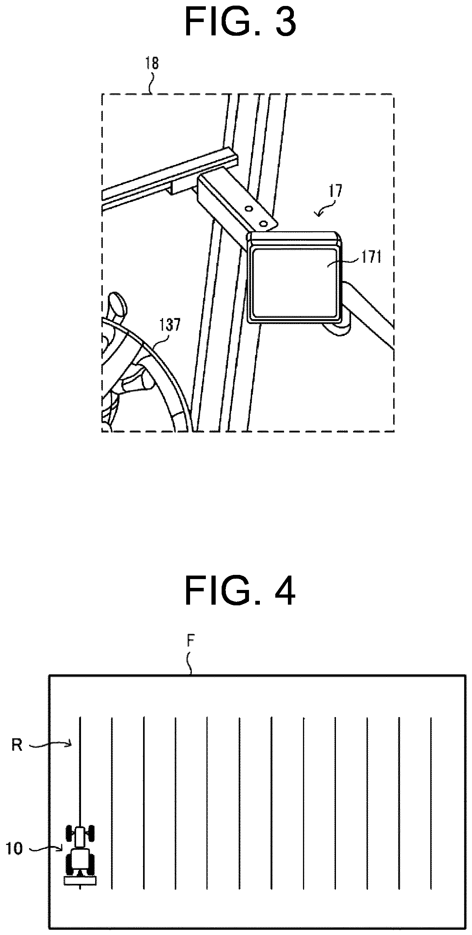

As shown in Figs. 1 and 2, an automatic run system 1 according to an embodiment of the present invention includes a work vehicle 10, a satellite 20, a base station (not shown). In the present embodiment, a description will be made on a case where the work vehicle 10 is a tractor as an example. As another embodiment, the work vehicle 10 may be a rice transplanter, a combine harvester, a construction machine, a snowplow, or the like. In response to the operator's operation, the work vehicle 10 performs given work (for example, tillage work) while running following a target route R in a farm field F (see Fig. 4). Specifically, the work vehicle 10 runs straight ahead on the target route R in response to an automatic steering, and perform a turn run in response to a manual steering (driving operation) by the operator. The work vehicle 10 runs in the farm field F while switching between the automatic run on a straight ahead route and the manual run on a turn route, thereby to perform the work. The target route R may be preliminarily generated based on the operator's operation, and stored as route data.

For example, in the farm field F shown in Fig. 4, the work vehicle 10 runs by repeating the straight ahead run and the turn run until the work is ended. The multiple straight ahead routes are substantially parallel to each other. The target route R shown in Fig. 4 is one example, and the target route R is appropriately determined according to a size of the work vehicle 10, a size of a work instrument 14, contents of the work, a shape of the farm field F, and the like.

The automatic run system 1 includes an operation terminal (a tablet terminal, a smartphone, or the like) that is operated by the operator. The operation terminal can communicate with the work vehicle 10 via a communication network such as a mobile phone network, a packet line network, or a wireless LAN. For example, the operator operates the operation terminal to register various types of information (work vehicle information, farm field information, work information, and the like), and the like. At a position away from the work vehicle 10, the operator can grasp a running status, a work status, and the like of the work vehicle 10 from a running track that is displayed on the operation terminal.

The satellite 20 is a positioning satellite that is included in a satellite positioning system such as GNSS (Global Navigation Satellite System), and sends a GNSS signal (satellite signal).

Using the GNSS signal sent from the satellite 20, a positioning unit 16 performs a positioning process that calculates the current position (latitude and longitude) of the work vehicle 10. Specifically, the positioning unit 16 is capable of positioning the work vehicle 10 by using the DGNSS positioning method which positions the work vehicle 10 based on positioning information (GNSS signal, etc.) received by a single receiver (positioning antenna 164).

Further, the positioning unit 16 can position the work vehicle 10 by using the RTK positioning method which positions the work vehicle 10 based on the GNSS signal and on correction information generated based on the GNSS signal. For example, the positioning unit 16 connects to a base station (not shown) placed corresponding to the farm field F or a portable terminal (smartphone) possessed by the operator, thereby to receive the correction information and perform the positioning by the RTK method. The RTK method is a positioning method higher in positioning accuracy than the DGNSS method.

The first and second positioning methods of the present invention are two different positioning methods with different positioning accuracies. For example, one of the DGNSS and RTK methods is an example of the first positioning method of the present invention, and the other is an example of the second positioning method of the present invention. Further, the positioning method is not limited to the DGNSS and the RTK method, but may be DGPS method or other positioning method.

### [Work Vehicle 10]

As shown in Fig. 1 and Fig. 2, the work vehicle 10 includes a vehicle control unit 11, a storage unit 12, a run unit 13, the work instrument 14, a communication unit 15, a positioning unit 16, an operation unit 17, and the like. The vehicle control unit 11 is electrically connected to the storage unit 12, the run unit 13, the work instrument 14, the positioning unit 16, the operation unit 17, and the like. Note that the vehicle control unit 11 and the positioning unit 16 may be capable of performing a wireless communication.

The communication unit 15 is a communication interface that connects the work vehicle 10 to the communication network in a wired or wireless manner, and performs, via the communication network, data communication, which accords to a given communication protocol, with an external device (operation terminal or the like).

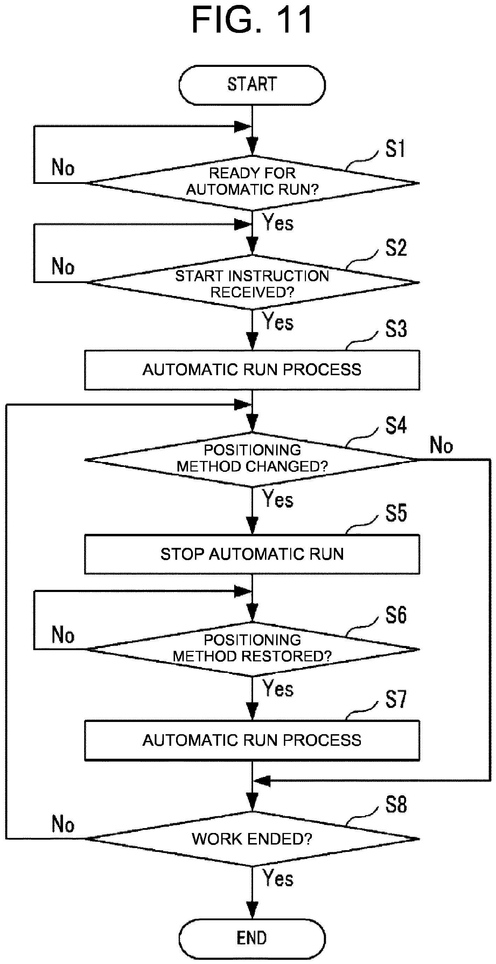

The storage unit 12 is a non-volatile storage unit, such as HDD (Hard Disk Drive) or SSD (Solid State Drive), that stores various types of information. The storage unit 12 stores a control program such as an automatic run program for causing the vehicle control unit 11 to execute an automatic run process described below (see Fig. 11). For example, the automatic run program is non-transitorily recorded in a computer-readable recording medium such as a CD or a DVD, and is read by a given reading unit (not shown) to be stored in the storage unit 12. Further, the automatic run program may be downloaded from a server (not shown) via the communication network to the work vehicle 10 to be stored in the storage unit 12. Further, in the storage unit 12, the target route R's data generated in the operation terminal may be stored.

The run unit 13 is a driving unit that causes the work vehicle 10 to run. As shown in Fig. 2, the run unit 13 has an engine 131, a front wheel 132, a rear wheel 133, a transmission 134, a front axle 135, a rear axle 136, and a steering wheel 137, and the like. It is noted that the front wheel 132 and the rear wheel 133 are provided on the left and right sides, respectively, of the work vehicle 10. Further, the run unit 13 is not limited to that of a wheel type including the front wheels 132 and the rear wheels 133 but may be that of a crawler type including crawlers provided to the right and left sides of the work vehicle 10.

The engine 131 is a drive source such as a diesel engine or a gasoline engine driven by using a fuel supplied to a fuel tank (not shown). The run unit 13 may include an electric motor as a drive source together with the engine 131 or instead of the engine 131. It is noted that a generator (not shown) is connected to the engine 131, and supplies electric power to electric components such as the vehicle control unit 11, a battery and the like, which are provided in the work vehicle 10. The battery stores the electric power supplied from the generator. Further, even after the engine 131 is stopped, the electric components such as the vehicle control unit 11, the positioning unit 16, and the operation unit 17, which are provided in the work vehicle 10, can be driven by the electric power supplied from the battery.

A drive force of the engine 131 is transmitted via the transmission 134 and the front axle 135 to the front wheel 132, and is transmitted via the transmission 134 and the rear axle 136 to the rear wheel 133. Also, the drive power of the engine 131 is transmitted via a PTO shaft (not shown) to the work instrument 14. The run unit 13 performs a running motion according to a command of the vehicle control unit 11.

The work instrument 14 is, for example, a cultivator, a seeder, a mower, a plow, a fertilizer applicator or the like, which can be removably attached to the work vehicle 10. As a result, the work vehicle 10 can perform any of the various work by using each of the work instruments 14. Fig. 2 shows a case where the work instrument 14 is the cultivator. In the work vehicle 10, the work instrument 14 may be supported by a lifting/lowering mechanism (not shown) in a manner to be lifted or lowered. The vehicle control unit 11 can lift/lower the work instrument 14 by controlling the lifting/lowering mechanism.

The steering wheel 137 is an operation unit operated by the operator or by the vehicle control unit 11. For example, the run unit 13 changes an angle of the front wheel 132 by a hydraulic power steering mechanism (not shown) in response to the steering wheel 137's operation by the operator or the vehicle control unit 11, thereby to change a forward direction of the work vehicle 10.

Further, other than the steering wheel 137, the run unit 13 includes a shift lever, an accelerator, and a brake (not shown) which are operated by the vehicle control unit 11. Then, in the run unit 13, a gear of the transmission 134 is switched to a forward gear, a backward gear or the like in accordance with the shift lever's operation by the vehicle control unit 11, and a running mode of the work vehicle 10 is switched to be forward, backward or the like. Further, the vehicle control unit 11 operates the accelerator thereby to control a revolution speed of the engine 131. Further, the vehicle control unit 11 operates the brake thereby to control rotations of the front wheels 132 and rear wheels 133 by using an electromagnetic brake.

The positioning unit 16 is a communicator including a positioning control unit 161, a storage unit 162, a communication unit 163, a positioning antenna 164 and the like. For example, as shown in Fig. 2, the positioning unit 16 is provided at an upper portion of the cabin 18 where the operator boards. However, a place for placing the positioning unit 16 is not limited to the cabin 18. Further, the positioning control unit 161, the storage unit 162, the communication unit 163, and the positioning antenna 164 of the positioning unit 16 may be dispersed at different positions in the work vehicle 10. As described above, the battery is connected to the positioning unit 16, and thus the positioning unit 16 can be operated even when the engine 131 is stopped. For example, a mobile phone terminal, a smartphone, a tablet terminal, or the like may be used as the positioning unit 16.

The positioning control unit 161 is a computer system having one or more processors, and a storage memory such as a non-volatile memory and a RAM. The storage unit 162 is non-volatile memory or the like that stores: a positioning control program for causing the positioning control unit 161 to perform a positioning process; and data such as positioning information and movement information. For example, the positioning control program is non-transiently recorded in a computer-readable recording medium such as a CD or a DVD, and is read by a given reader (not shown) and stored in the storage unit 162. Further, the positioning control program may be downloaded from a server (not shown) via the communication network to the positioning unit 16 and stored in the storage unit 162.

The communication unit 163 is a communication interface that connects the positioning unit 16 to the communication network in the wired or wireless manner, and performs, via the communication network, the data communication, which accords to the given communication protocol, with the external device such as a base station server.

The positioning antenna 164 receives a radio wave (GNSS signal) emitted from the satellite 20.

The positioning control unit 161 includes various processing units such as a positioning processing unit 181 and a switch processing unit 182. Further, the positioning control unit 161 executes various processes according to the automatic run program, thereby to function as the various processing units. Further, as another embodiment, part or all of the positioning processing unit 181 and switch processing unit 182 may include an electronic circuit.

The positioning processing unit 181 positions the work vehicle 10's position by a given positioning method (DGNSS method, RTK method, etc.) based on the GNSS signal received by the positioning antenna 164 from the satellite 20. Specifically, the positioning processing unit 181 positions the work vehicle 10 by the DGNSS method with the positioning method set to the DGNSS method, and positions the work vehicle 10 by the RTK method with the positioning method set to the RTK method. The positioning processing unit 181 is an example of a positioning processing unit of the present invention.

The switch processing unit 182 mutually switches between the method DGNSS and the RTK method. Specifically, the switch processing unit 182 switches between the DGNSS method and the RTK method based on the operation by the operator, the positioning state in the positioning processing unit 181, and the like. For example, when the operator connects a mobile terminal (such as a smartphone) via Bluetooth (registered trademark) or a communication cable to the positioning unit 16 and the positioning state is ready for the RTK positioning, the switch processing unit 182 switches the positioning method from the DGNSS method to the RTK method. Further, when the number of satellites 20 capable of receiving the GNSS signal is large and the positioning state is ready for the RTK positioning, the switch processing unit 182 switches the positioning method from the DGNSS method to the RTK method. Further, when the number of 20 satellites that can receive the GNSS signal decreases due to an obstacle such as a windbreak, a building, etc. present near the farm field F thereby to decrease the positioning state, the switch processing unit 182 switches the positioning method from the RTK method to the DGNSS method.

Here, the positioning method may be preset to the DGNSS method. That is, the default of the positioning method may be set to the DGNSS method. In this case, when the engine 131 of the work vehicle 10 is started, the positioning processing unit 181 starts receiving the GNSS signal sent from the satellite 20, and executes the positioning process until the positioning state is ready for the DGNSS positioning. The positioning processing unit 181 sends a positioning completion notification to the vehicle control unit 11. When the positioning state is ready for the DGNSS positioning, the vehicle control unit 11 permits the automatic run by the DGNSS method. When receiving a run start instruction from the operator with the positioning state ready for the DGNSS positioning, the run processing unit 111 of the vehicle control unit 11 starts the work vehicle 10's automatic run by the DGNSS method.

The operation unit 17 is a device operated by the operator boarding the work vehicle 10, and is provided with an operation display unit 171. The operation display unit 171 is a user interface that includes: a display unit, such as a liquid crystal display or an organic EL display, for displaying various types of information; and an operation unit, such as an operation button or a touch screen, that receives an operation. The operation display unit 171 displays various setting screens and work screens. Further, the operation display unit 171 receives the operator's operation on the setting screen or the work screen. For example, as shown in Fig. 2 and Fig. 3, the operation unit 17 is placed near the steering wheel 137 in the cabin 18. Also, the operation unit 17 may be an operation terminal (tablet terminal, smartphone and the like) that can be carried by the operator. Further, the operation display unit 171 includes an automatic run button (not shown) for the operator to give the run start instruction when causing the work vehicle 10 to start the automatic run.

Further, on the operation unit 17, the operator can make various settings related to the automatic run. For example, the operator can set the positioning method on a setting screen D1.

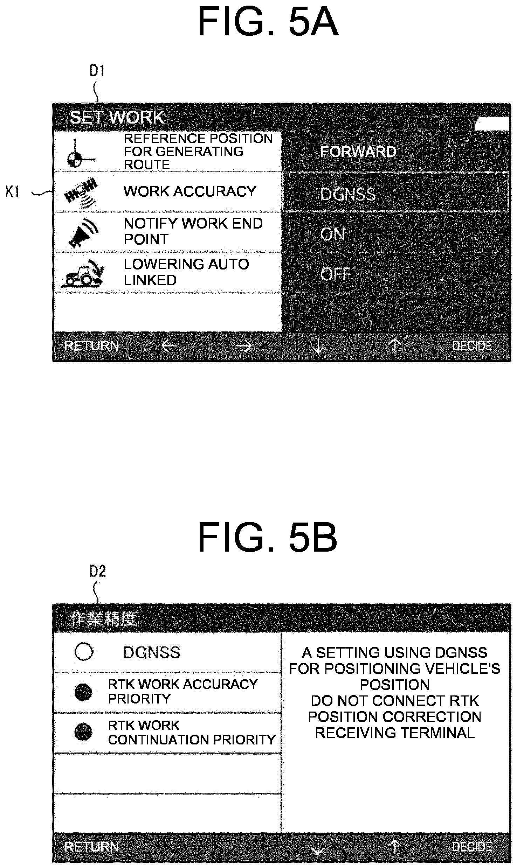

Fig. 5A shows an example of the setting screen D1. Among the multiple setting items displayed on the setting screen D1, an item K1 of "Work Accuracy" is for setting the positioning method.

To set or change the positioning method, the operator selects the item K 1 (presses down the "Determine" button) on the setting screen D 1. When the operator selects the item K1, the operation unit 17 displays a setting screen D2 shown in Fig. 5B. The setting screen D2 displays, as a selectable positioning method, "DGNSS", "RTK Work Accuracy Priority", and "RTK Work Continuation Priority". The "RTK Work Accuracy Priority" is a setting item that, while positioning by the RTK method, executes a process to stop the automatic run (automatic steering) when the positioning accuracy declines. The "RTK Work Continuation Priority" is a setting item that, while positioning by the RTK method, executes a process to continue the automatic run (automatic steering) for a certain time even if the positioning accuracy declines.

The operator can select the positioning method according to the contents of the work. In the present embodiment, it is assumed that the DGNSS method is set as the initial (default) setting of the positioning method.

The vehicle control unit 11 has a control device such as a CPU, a ROM, and a RAM. The CPU is a processor that performs various types of arithmetic processes. The ROM is a non-volatile storage unit in which control programs, such as a BIOS and an OS, for causing the CPU to perform the various types of arithmetic processes are preliminarily stored. The RAM is a volatile or non-volatile storage unit that stores various types of information, and is used as a transient storage memory (work area) of the various types of processes to be performed by the CPU. Then, performing, with the CPU, the various types of control programs preliminarily stored in the ROM or the storage unit 12, the vehicle control unit 11 controls the work vehicle 10.

As shown in Fig. 1, the vehicle control unit 11 includes various types of processing units such as the run processing unit 111 and a reception processing unit 112. It is noted that the vehicle control unit 11 executes, with the CPU, various types of processes that accord to the automatic run program, thereby to function as the various types of processing units. Further, part or all of the processing units may be configured by an electronic circuit. It is noted that the automatic run program may be a program for causing multiple processors to function as the processing units.

The run processing unit 111 controls the run of the work vehicle 10. Specifically, the run processing unit 111 causes the work vehicle 10 to perform the automatic run based on the position information showing the work vehicle 10's position positioned by the positioning processing unit 181. For example, when the positioning state is ready for the DGNSS positioning and the operator presses down the automatic run button of the operation unit 17, the run processing unit 111 causes the work vehicle 10 to start the automatic run based on the position information showing the work vehicle 10's position positioned by the DGNSS method. As a result, the work vehicle 10 starts the automatic run following the target route R, starting the work by the work instrument 14. Further, the run processing unit 111 may cause the work vehicle 10 to automatically run on the straight ahead route by the automatic steering, and to manually run on the turn route by the manual steering of the operator.

When remotely operating the work vehicle 10 without boarding the work vehicle 10, the operator inputs the run start instruction at the operation terminal. When acquiring the run start instruction from the operation terminal, the run processing unit 111 causes the work vehicle 10 to automatically run following the target route R while performing the positioning by the DGNSS method. Further, acquiring the run stop instruction from the operation terminal, the run processing unit 111 causes the work vehicle 10 to stop the automatic run. The run processing unit 111 is an example of a run processing unit of the present invention.

The work vehicle 10 according to the present embodiment may employ any of a run method for running while switching between the automatic steering and the manual steering by the operator (first run method), and a run method for running only by the automatic steering (second run method).

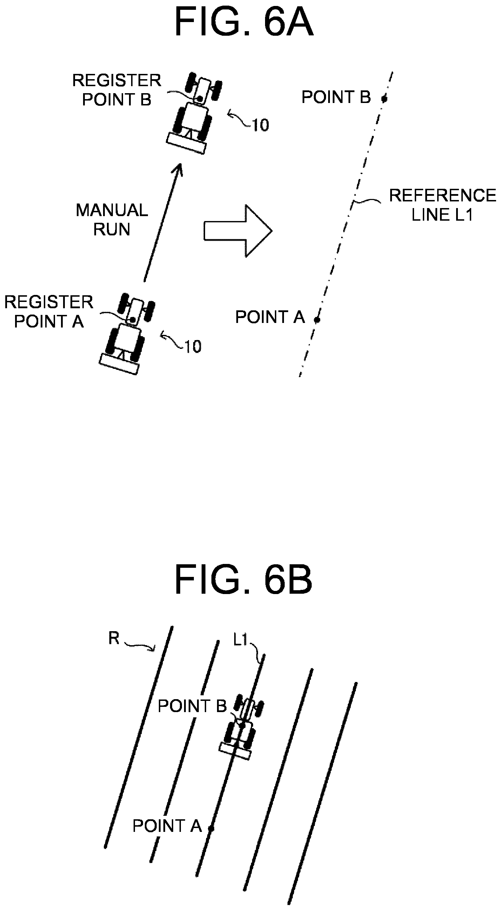

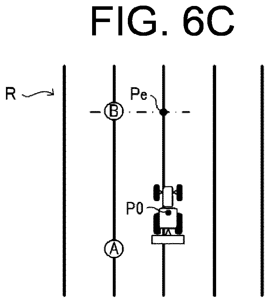

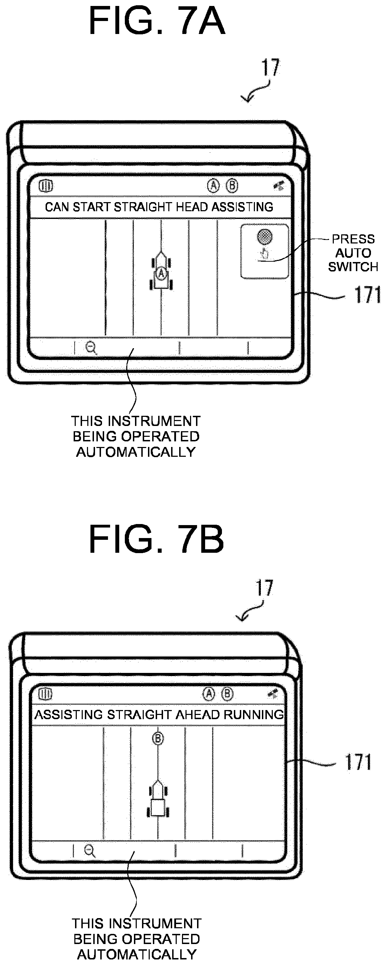

Here, a specific example of the automatic run (first run pattern) will be described with reference to Figs. 6A, 6B and 6C, and Figs. 7A and 7B. In the present embodiment, the work vehicle 10 is caused to automatically run in the farm field F shown in Fig. 4.

First, the operator sets a reference line L1 for generating the straight ahead route which is the target route R. For example, at an optional position in the farm field F (an outer peripheral end portion, for example), the operator causes the work vehicle 10 to manually run in a direction (target direction) in which the operator wants the work vehicle 10 to run and to work. Specifically, the operator causes the work vehicle 10 to run straight ahead in a direction parallel to a work direction (a cultivating direction, for example) used when the work vehicle 10 is to work in the work area. Then, the operator, when the work vehicle 10 is being caused to manually run in the intended target direction, operates (for example, touches) the operation display unit 171 twice at any position (for example, front or rear end portion of the work area). The vehicle control unit 11, by the operator's first operation, registers a position (point A) of the work vehicle 10, and registers, by the operator's second operation, a position (point B) of the work vehicle 10. Acquiring the position information of the point A and point B, the vehicle control unit 11 sets, as the reference line L1, a straight line passing through the point A and the point B (see Fig. 6A). The vehicle control unit 11 may be able to register the point B when the work vehicle 10 has run a given distance (for example, 5 m) after registering the point A. This can set the reference line L1 that is more accurate. The vehicle control unit 11 generates a run route (target route R) that includes the reference line L1 and a multiplicity of straight lines parallel to the reference line L1. For example, the vehicle control unit 11 generates a multiplicity of parallel straight lines based on a preset work width (lateral width of the work instrument 14) and a lap width (width overlapping the adjacent work-ended area), equally spaced left and right with the reference line L1 as a center (see Fig. 6B). The vehicle control unit 11 registers the generated target route R in the storage unit 12, and causes the operation unit 17 to display the generated target route R.

After the target route R is generated; for causing the work vehicle 10 to run straight ahead by the automatic steering in the farm field F, the operator, while watching the target route R displayed on the operation unit 17, moves the work vehicle 10 by the manual steering so that the direction (azimuth) of the work vehicle 10 becomes within a given range (given azimuth) relative to the direction of the reference line L1 (meeting the automatic run start condition) (see Fig. 6C).

Fig. 7A shows an operation screen showing that the work vehicle 10 meets the automatic run start condition and is ready for the automatic run. The vehicle control unit 11, when the work vehicle 10 meets the automatic run start condition, causes the operation display unit 171 to display the operation screen shown in Fig. 7A. When the work vehicle 10 is ready for the automatic run, the operator presses the automatic run button (not shown) of the operation display unit 171 thereby to give the run start instruction. When the reception processing unit 112 receives the run start instruction, the run processing unit 111 starts the automatic steering of the work vehicle 10 so that the work vehicle 10 is along the straight ahead route closest to a current position P0 (see Fig. 6C). With this, the run processing unit 111 causes the work vehicle 10 to automatically run by the automatic steering along the straight ahead route.

Fig. 7B shows the display screen seen when the work vehicle 10 is automatically running. The vehicle control unit 11, when the work vehicle 10 starts the automatic run, causes the operation display unit 171 to display the display screen shown in Fig. 7B. The vehicle control unit 11, on the display screen, displays the straight ahead route, a work-ended area (work status), and the like.

As described above, the first run pattern of the first run method is so configured that the automatic run is performed by preliminarily generating the target route R according to the work width and lap width of the work vehicle 10. As a second run pattern of the first run method, it may be so configured that the automatic run is performed by generating the target route R on the basis of the work vehicle 10's position.

In the second run pattern, after the reference line L1 is set (see Fig. 6A), for example; when the operator moves the work vehicle 10 to the work start position and presses down the automatic run button, the vehicle control unit 11 causes the work vehicle 10 to run straight ahead, from the work start position, parallel to the reference line L1 by the automatic steering.

The vehicle control unit 11 may apply the first and second run patterns according to the operator's selecting operation. For example, the vehicle control unit 11 may selectably display, on the setting screen (not shown), a first route creation mode that corresponds to the first run pattern and a second route creation mode that corresponds to the second run pattern, thereby to perform the automatic run by the route creation mode selected by the operator.

Further, in the first and second run patterns; when the work vehicle 10 runs straight ahead by the automatic steering thereby to approach an end point Pe (point where a line perpendicular to the reference line L1 and passing through the point B intersects with the straight ahead route (straight line)) that corresponds to the point B of the reference line L1 (see Fig. 6C), the run processing unit 111 gives, to the operator, guidance information showing that the work vehicle 10 has approached the end point Pe (a message display, a voice guidance, etc.). Confirming the guidance information, the operator ends the automatic steering.

The run processing unit 111, when the work vehicle 10 reaches the end point Pe (end point of straight ahead route), switches the run mode to the manual run. The run processing unit 111 may switch the run mode to the manual run when determining that the work vehicle 10 has reached the end point Pe, or may switch the run mode to the manual run in response to the operator's operation. When the run mode is switched to the manual run, the operator causes the work vehicle 10 to perform the turn run by the manual steering, for example.

As described above, the run processing unit 111 switches the run mode in response to the operator's operation on the operation unit 17, causes the work vehicle 10 to automatically run on the straight ahead route (the target route R) by the automatic steering, and to manually run on the turn route by the manual steering. The run method of the work vehicle 10 of the present invention is not limited to the embodiment described above.

The reception processing unit 112 receives the various operations by the operator. For example, on a setting screen (not shown) for setting the work information displayed on the operation unit 17, the reception processing unit 112 receives an operation to set the type of work instrument 14, the work width, the lap width, the route offset amount, etc. Further, on the setting screen D1 (see Figs. 5A and 5B), the reception processing unit 112 receives an operation to set the positioning method. In the present embodiment, the positioning method is set to the DGNSS method, and the run processing unit 111, by the DGNSS method, causes the work vehicle 10 to automatically run.

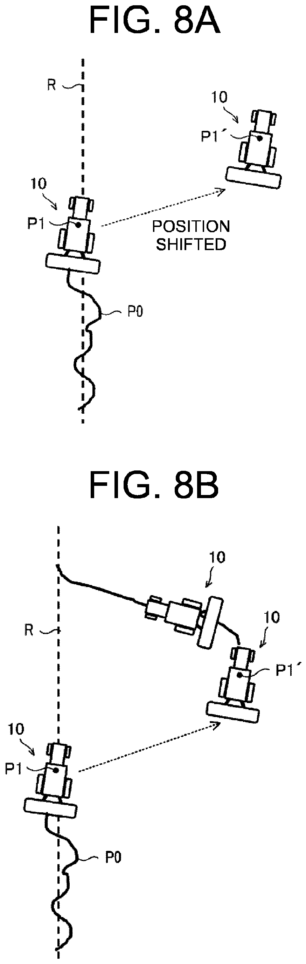

By the way, the DGNSS method and the RTK method are different in positioning accuracy from each other; thus, when the positioning method is switched to the RTK method at the time of the work vehicle 10's automatically running while performing the positioning by the DGNSS method, for example, the work vehicle 10's self-recognized position between before and after the switching of the positioning method is significantly shifted. This so moves the work vehicle 10 as to follow the target route R immediately after the switching of the positioning method, resulting in unstable behavior of the work vehicle 10, causing a problem of a deteriorated work accuracy. Examples of this problem are shown in Figs. 8A and 8B.

In Fig. 8A, "R" shows the target route (straight ahead path), "P1" and "P1'" each show the work vehicle 10's current self-recognized position, and "P0" shows the self-recognized position that corresponds to a run history of the work vehicle 10. Since the DGNSS method is not high in positioning accuracy, the self-recognized position has a certain error (several meters) relative to the work vehicle 10's current position.

Here, while the work vehicle 10 is automatically running by the DGNSS method, the positioning method, as the case may be, is switched to the RTK method. For example, when the mobile terminal (smartphone) of the operator is connected via the Bluetooth or the communication cable to the positioning unit 16 and is ready for the RTK positioning (high accuracy state), the switch processing unit 182 switches the positioning method to the RTK method. When the positioning method is switched from the DGNSS method to the RTK method, a positional shift is caused between the self-recognized position P1 positioned by the DGNSS method and the self-recognized position P1' positioned by the RTK method, as shown in Fig. 8A.

When the positional shift of the self-recognized positions P1 and P1' is caused between before and after the switching of the positioning method, the run processing unit 111 executes the run control to cause the work vehicle 10's self-recognized position P1' by the RTK method to follow the target route R. For example, as shown in Fig. 8B, the steering wheel 137 is significantly turned to the left side thereby to change the run direction of the work vehicle 10. This causes the behavior of the work vehicle 10 to become unstable, thereby to deteriorate the work accuracy of the work vehicle 10. Further, this causes discomfort to the operator boarding the work vehicle 10. The above problem is likewise caused when the positioning method is switched to the DGNSS method while the work vehicle 10 is automatically running by the RTK method.

Further, the above problem is caused when the work vehicle 10 starts automatically running. For example, with the positioning method set to the DGNSS method, and when the positioning method is switched to the RTK method after the work vehicle 10 meets the automatic run start condition and the operator gives the run start instruction, there is caused the positional shift between the self-recognized position P1 positioned by the DGNSS method and the self-recognized position P1' positioned by the RTK method. In this case, the steering wheel 137 is significantly turned immediately after the start of the automatic run, making the behavior of the work vehicle 10 unstable. In this way, the work vehicle 10 switching from the first positioning method to the second positioning method, which is different in positioning accuracy, makes the behavior of the work vehicle 10 unstable, causing the problem of the deteriorated work accuracy.

Thus, the work vehicle 10 according to the present embodiment is provided with a configuration that makes it possible to maintain the work accuracy even in the case of switching the positioning method. For specific configurations, herein shown are first, second, and third configuration examples.

### [First Configuration Example]

As the first configuration example; the run processing unit 111, when the work vehicle 10 is ready for the automatic run by the first positioning method, and when the positioning method is switched to the second positioning method which is different in positioning accuracy from the first positioning method, prohibits the automatic run.

For example, the run processing unit 111 stops the automatic run (stops the work vehicle 10) when the work vehicle 10 is automatically running by the first positioning method, and when the positioning method is switched to the second positioning method. For example, as shown in Fig. 8A, when the work vehicle 10 is automatically running following the target route R by the DGNSS method, and when the positioning method is switched to the RTK method, the run processing unit 111 stops the automatic run (stops the work vehicle 10). The vehicle control unit 11, when the automatic run is stopped, may cause the operation unit 17 to display warning information. For example, the vehicle control unit 11 may cause the operation unit 17 to display a message for prompting to disconnect the communication of the mobile terminal connected to the positioning unit 16. The run processing unit 111, when the positioning method is switched from the RTK method to the DGNSS method (in the case of restoring), causes the work vehicle 10 to restart the automatic run.

Further, when the work vehicle 10 is automatically running following the target route R by the RTK method, and when the positioning method is switched to the DGNSS method, for example, the run processing unit 111 stops the automatic run (stops the work vehicle 10). In this case, the vehicle control unit 11 may cause the operation unit 17 to display a message for prompting to wait until the positioning accuracy is ready for the RTK positioning, or a message for prompting to move the work vehicle 10 by the manual steering to a position where the positioning accuracy is ready for the RTK positioning. Further, the run processing unit 111, when the positioning method is switched from the DGNSS method to the RTK method (in the case of restoring), causes the work vehicle 10 to restart the automatic run.

Further, when the positioning method is switched to the RTK method at the time point of the work vehicle 10's starting the automatic run with the positioning method set to the DGNSS method (see Fig. 5A), for example, the run processing unit 111 prohibits the start of the automatic run. The vehicle control unit 11, when the run processing unit 111 prohibits the start of the automatic run, may cause the operation unit 17 to display a message for prompting to disconnect the communication of the mobile terminal connected to the positioning unit 16. Further, the run processing unit 111, when the positioning method is switched from the RTK method to the set DGNSS method, permits the automatic run.

Further, when the positioning method is switched to the DGNSS method at the time point of the work vehicle 10's starting the automatic run with the positioning method set to the RTK method (see Fig. 5B), for example, the run processing unit 111 prohibits the start of the automatic run. The vehicle control unit 11, when the run processing unit 111 prohibits the start of the automatic run, may cause the operation unit 17 to display a message for prompting to wait until the positioning accuracy is ready for the RTK positioning, or a message for prompting to move, by the manual steering, the work vehicle 10 to a position where the positioning accuracy is ready for the RTK positioning. Further, the run processing unit 111, when the positioning method is switched from the DGNSS method to the set RTK method, permits the automatic run.

As described above, in the first configuration example; the vehicle control unit 11, when the work vehicle 10 is ready for the automatic run by the first positioning method (when automatically running by the first positioning method, or when ready for starting the automatic run by the first positioning method), and when the positioning method is switched to the second positioning method, prohibits the automatic run (e.g., stops the automatic run, stops the work vehicle 10, or prohibits the start of the automatic run).

### [Second Configuration Example]

As a second configuration example; the run processing unit 111, when the positioning method is switched from the first positioning method to the second positioning method, and when a distance difference between the work vehicle 10's position (self-recognized position) positioned by the first positioning method and the work vehicle 10's position (self-recognized position) positioned by the second positioning method is more than or equal to a threshold value, prohibits the automatic run. The distance difference is a distance from the position of the previous positioning process to the position of the current positioning process.

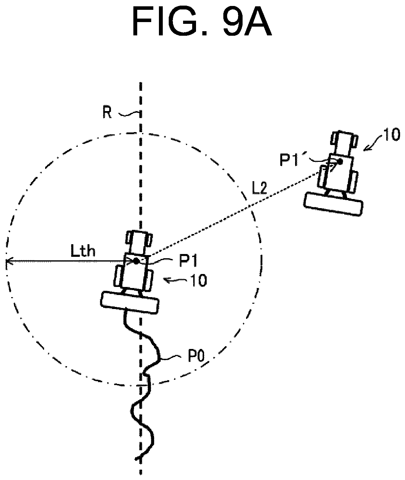

For example, the run processing unit 111, when the work vehicle 10 is automatically running by the first positioning method, and when the positioning method is switched to the second positioning method, and when the distance difference between the work vehicle 10's position positioned by the first positioning method and the work vehicle 10's position positioned by the second positioning method is more than or equal to the threshold value, stops the automatic run (stops the work vehicle 10). For example, as shown in Fig. 9A, when the work vehicle 10 is automatically running by the DGNSS method, and when the positioning method is switched to the RTK method, and when a distance difference L2 between the work vehicle 10's self-recognized position P1 positioned by the DGNSS method and the work vehicle 10's self-recognized position P1' positioned by the RTK method is more than or equal to a threshold value Lth, the run processing unit 111 stops the automatic run (stops the work vehicle 10).

Further, for example, as shown in Fig. 9A, when the work vehicle 10 is automatically running by the RTK method, and when the positioning method is switched to the DGNSS method, and when the distance difference L2 between the work vehicle 10's self-recognized position P1 positioned by the RTK method and the work vehicle 10's self-recognized position P1' positioned by the DGNSS method is more than or equal to the threshold value Lth, the run processing unit 111 stops the automatic run (stops the work vehicle 10).

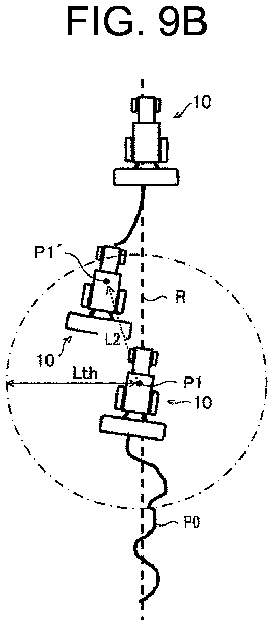

For example, as shown in Fig. 9B, when the work vehicle 10 is automatically running by the DGNSS method, and when the positioning method is switched to the RTK method, and when the distance difference L2 between the work vehicle 10's self-recognized position P1 positioned by the DGNSS method and the work vehicle 10's self-recognized position P1' positioned by the RTK method is less than the threshold value Lth, the run processing unit 111 continues the automatic run. In this case, the work vehicle 10 so continues the automatic run as to follow the target route R while performing the positioning by the RTK method.

For example, as shown in Fig. 9B, when the work vehicle 10 is automatically running by the RTK method, and when the positioning method is switched to the DGNSS method, and when the distance difference L2 between the work vehicle 10's self-recognized position P1 positioned by the RTK method and the work vehicle 10's self-recognized position P1' positioned by the DGNSS method is less than the threshold value Lth, the run processing unit 111 causes the work vehicle 10 to continue the automatic run. In this case, the work vehicle 10 so continues the automatic run as to follow the target route R while performing the positioning by the DGNSS method.

Further, when the positioning method is switched to the RTK method at the time point of the work vehicle 10's starting the automatic run with the positioning method set to the DGNSS method (see Fig. 5A), and when the distance difference L2 is more than or equal to the threshold value Lth, for example, the run processing unit 111 prohibits the start of the automatic run.

Further, when the positioning method is switched to the DGNSS method at the time point of the work vehicle 10's starting the automatic run with the positioning method set to the RTK method (see Fig. 5B), and when the distance difference L2 is more than or equal to the threshold value Lth, for example, the run processing unit 111 prohibits the start of the automatic run.

Further, when the positioning method is switched to the RTK method at the time point of the work vehicle 10's starting the automatic run with the positioning method set to the DGNSS method (see Fig. 5A), and when the distance difference L2 is less than the threshold value Lth, for example, the run processing unit 111 permits the start of the automatic run.

Further, when the positioning method is switched to the DGNSS method at the time point of the work vehicle 10's starting the automatic run with the positioning method set to the RTK method (see Fig. 5B), and when the distance difference L2 is less than the threshold value Lth, for example, the run processing unit 111 permits the start of the automatic run.

As described above, in the second configuration example; the vehicle control unit 11, when the work vehicle 10 is ready for the automatic run by the first positioning method (when automatically running by the first positioning method, or when ready for starting the automatic run by the first positioning method), and when the distance difference L2 between the work vehicle 10's position (self-recognized position P1) positioned by the first positioning method and the work vehicle 10's position (self-recognized position P1') positioned by the second positioning method is more than or equal to the threshold value Lth, prohibits the automatic run, and, when the distance difference L2 is less than the threshold value Lth, permits the automatic run (continues or starts). Thus, when the change in the self-recognized position is small, the change in the behavior of the work vehicle 10 is small, thus the automatic run may be permitted.

The threshold value Lth is set to a distance that, for causing the work vehicle 10 to continue or start the automatic run, enables the work vehicle 10 to follow, from the self-recognized position P1', the target route R which is stable. Further, the vehicle control unit 11 may differentiate, from each other, the threshold value Lth used for a determining process when the DGNSS method is switched to the RTK method, and the threshold value Lth used for the determining process when the RTK method is switched to the DGNSS method.

For example, when the positioning method with the low positioning accuracy is switched to the positioning method with the high positioning accuracy, time until the positioning method is restored tends to be shorter, and when the positioning method with the high positioning accuracy is switched to the positioning method with the low positioning accuracy, time until the positioning method is restored tends to be longer. Due to this, the vehicle control unit 11 may set the time that such the threshold value Lth used for the determining process for the restoring to the DGNSS method in the case of the switching from the DGNSS method to the RTK method becomes a distance shorter than the threshold value Lth used for the determining process for the restoring to the RTK method in the case of the switching from the RTK method to the DGNSS method.

### [Third Configuration Example]

As a third configuration example; the run processing unit 111, when the work vehicle 10 is ready for the automatic run by the first positioning method, and when the positioning method is switched to the second positioning method which is different in positioning accuracy from the first positioning method, permits the automatic run until a given time elapses after the switching from the first positioning method to the second positioning method.

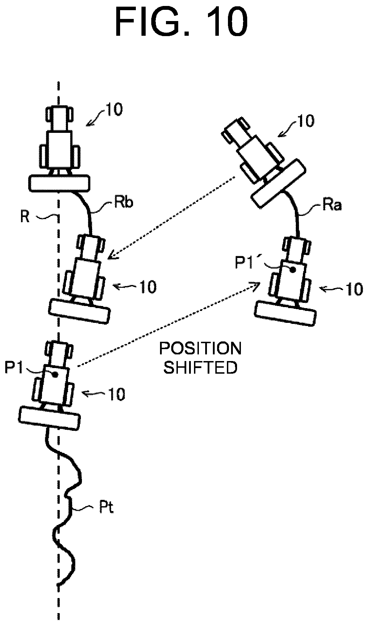

The run processing unit 111, when the work vehicle 10 is automatically running by the first positioning method, and when the positioning method is switched to the second positioning method, for example, causes the work vehicle 10 to continue the automatic run until the given time elapses after the switching from the first positioning method to the second positioning method. For example, as shown in Fig. 10, when the work vehicle 10 is automatically running by the DGNSS method, and when the positioning method is switched to the RTK method, the run processing unit 111 causes the work vehicle 10 to continue the automatic run until the given time elapses after the switching to the RTK method. A run route Ra shown in Fig. 10 shows a route along which the work vehicle 10 ran during the given time after the positional shift of the work vehicle 10.

When the positioning method is switched (is restored) from the RTK method to the DGNSS method before the given time elapses, the run processing unit 111 causes the work vehicle 10 to continue the automatic run in the DGNSS method. A run route Rb shown in Fig. 10 shows the work vehicle 10's run route seen after the given time elapses and the vehicle is restored to the DGNSS method.

Further, the run processing unit 111, when the positioning method fails to be switched from the first positioning method to the second positioning method before the given time elapses after the positioning method is switched from the first positioning method to the second positioning method, prohibits the automatic run. Further, the run processing unit 111, when the positioning method fails to be switched from the RTK method to the DGNSS method before the given time elapses after the positioning method is switched from the DGNSS method to the RTK method, for example, stops the automatic run. In this case, by the RTK method, the work vehicle 10 automatically runs along the run route Ra and stops.

Further, the run processing unit 111, when the positioning method is switched to the RTK method, at the time point of the work vehicle 10's starting the automatic run with the positioning method set to the DGNSS method (see Fig. 5A), for example, causes the work vehicle 10 to start the automatic run and to continue, until the given time elapses, the automatic run by the RTK method. Further, when the positioning method fails to be switched from the RTK method to the DGNSS method before the given time elapses, the run processing unit 111 causes the work vehicle 10 to stop the automatic run.

Further, the run processing unit 111, when the positioning method is switched to the DGNSS method, at the time point of the work vehicle 10's starting the automatic run with the positioning method set to the RTK method (see Fig. 5B), for example, causes the work vehicle 10 to start the automatic run and to continue, until the given time elapses, the automatic run by the DGNSS method. When the positioning method fails to be switched from the DGNSS method to the RTK method before the given time elapses, the run processing unit 111 stops the automatic run.

As described above, in the third configuration example; the vehicle control unit 11, when the work vehicle 10 is ready for the automatic run by the first positioning method (when automatically running by the first positioning method, or when ready for starting the automatic run by the first positioning method), and when the positioning method is switched to the second positioning method, permits the automatic run until the given time elapses, and when the positioning method is not restored to the first positioning method before the given time elapses, prohibits the automatic run.

Further, the given time may be set according to the history of the positioning state. When the place where the positioning state changes in the farm field F can be identified from the information of the run history in the past work, for example, the given time can be set by calculating the time required to pass through the above place.

Further, the vehicle control unit 11 may cause the given time used for the determining process when the DGNSS method is switched to the RTK method and the given time used for the determining process when the RTK method is switched to the DGNSS method to differ from each other. In the case of the switching from the positioning method with the low positioning accuracy to the positioning method with the high positioning accuracy, for example, the distance difference in the self-recognized position between before and after the switching of the positioning method tends to be larger, meanwhile in the case of the switching from the positioning method with the high positioning accuracy to the positioning method with the low positioning accuracy, the distance difference in the self-recognized position between before and after the switching of the positioning method tends to be smaller. Due to this, the vehicle control unit 11 may set the given time used for the determination process when the DGNSS method is switched to the RTK method to a time shorter than the given time used for the determination process when the RTK method is switched to the DGNSS method.

### [Automatic Run Process]

Hereinafter, with reference to Fig. 11, an example of the automatic control process executed by the vehicle control unit 11 will be described. Note that the present invention may be understood as an invention of an automatic run method in which the vehicle control unit 11 executes part or all of the automatic run process or an invention of an automatic run program for causing the vehicle control unit 11 to execute part or all of the run control method. Further, one or more processors may execute the automatic run process.

In the following, it is assumed that the positioning method of the work vehicle 10 is set to the DGNSS method (see Fig. 5A).

First, at step S1, the vehicle control unit 11 determines whether or not the work vehicle 10 is ready for the automatic run. For example, the vehicle control unit 11, when the starting automatic run condition, such as the work vehicle 10's azimuth being within the given azimuth, is met, determines that the work vehicle 10 is ready for the automatic run. The vehicle control unit 11, when determining that the work vehicle 10 is ready for the automatic run (S1: Yes), moves the process to step S2. The vehicle control unit 11 waits until the work vehicle 10 is ready for the automatic run (S 1: No).

Next, at step S2, the vehicle control unit 11 determines whether or not the operation of starting the automatic run (run start instruction) has been received from the operator. When the operator presses down the automatic run button of the operation unit 17, for example, the vehicle control unit 11 receives the run start instruction. When receiving the run start instruction (S2: Yes), the vehicle control unit 11 moves the process to step S3. The vehicle control unit 11 waits until receiving the run start instruction (S2: No).

At step S3, the vehicle control unit 11 executes the automatic run process. For example, the vehicle control unit 11 starts the automatic run by the DGNSS method. Specifically, the vehicle control unit 11 starts the automatic steering such that the work vehicle 10 is along the straight ahead route that is among the multiple straight ahead routes included in the target route R and that is closest to the current position P0 (see Fig. 6C). With this, the vehicle control unit 11 causes the work vehicle 10 to automatically run by the automatic steering along the straight ahead route. The work vehicle 10, while performing the positioning by the DGNSS method, performs the automatic run following the straight ahead route.

Next, at step S4, the vehicle control unit 11 determines whether or not the positioning method is changed (switched). Here, the vehicle control unit 11 determines whether or not the positioning method is switched from the DGNSS method to the RTK method. For example, when the mobile terminal (smartphone) of the operator is connected via the Bluetooth or the communication cable to the positioning unit 16 and is ready for the RTK positioning (high accuracy state), the positioning unit 16 (switch processing unit 182) switches the positioning method to the RTK method. In this case, the vehicle control unit 11 determines that the positioning method is switched from the DGNSS method to the RTK method. When determining that the positioning method is changed (S4: Yes), the vehicle control unit 11 moves the process to step S5. Meanwhile, when determining that the positioning method is not changed (S4: No), the vehicle control unit 11 moves the process to step S8.

At step S5, the vehicle control unit 11 stops the automatic run of the work vehicle 10 (stops the work vehicle 10). When the positioning method is switched from the DGNSS method to the RTK method during the automatic run of the work vehicle 10, for example, the vehicle control unit 11 causes the work vehicle 10 to stop the automatic run (stops the work vehicle 10) at that time point. Further, then the positioning method is switched from the DGNSS method to the RTK method at the time point of the work vehicle 10's starting the automatic run, the vehicle control unit 11 prohibits the start of the automatic run.

Next, at step S6, the vehicle control unit 11 determines whether or not the positioning method is restored. Here, the vehicle control unit 11 determines whether or not the positioning method is switched from the RTK method to the DGNSS method. For example, when the connection between the operator's mobile terminal and the positioning unit 16 is disconnected, the positioning unit 16 (switch processing unit 182) switches the positioning method to the DGNSS method. In this case, the vehicle control unit 11 determines that the positioning method is switched from the RTK method to the DGNSS method. When determining that the positioning method is restored (S6: Yes), the vehicle control unit 11 moves the process to step S7. The vehicle control unit 11, until the positioning method is restored (S6: No), maintains the state of stopping the automatic run.

At step S7, the vehicle control unit 11 executes the automatic run process. The vehicle control unit 11, by the DGNSS method for example, restarts the automatic run having been stopped. Further, the vehicle control unit 11, by the DGNSS method for example, starts the automatic run having been prohibited. As a result, the work vehicle 10, while performing the positioning by the DGNSS method, performs the automatic run following the target route R (straight ahead route).

At step S8, the vehicle control unit 11 determines whether or not the work vehicle 10 has ended the work. When the work vehicle 10 has ended the work (S8: Yes), the vehicle control unit 11 ends the automatic run process. Meanwhile, when the work vehicle 10 has not ended the work (S8: No), the vehicle control unit 11 moves the process to step S4.

The vehicle control unit 11, when the work vehicle 10 starts the automatic run, repeats the processes at steps S4 to S8 until the work by the work vehicle 10 is ended.

As described above, the automatic run system 1 according to the present embodiment positions the work vehicle 10's position by the given positioning method based on the satellite signal received from the satellite 20, and causes the work vehicle 10 to automatically run based on the position information showing the work vehicle 10's position that is positioned. Further, the automatic run system 1 is so configured as to be capable of prohibiting the automatic run when the work vehicle 10 is ready for the automatic run by the first positioning method, and when the positioning method is switched to the second positioning method which is different in positioning accuracy from the first positioning method.

For example, the automatic run system 1, when the work vehicle 10 is ready for the automatic run by the first positioning method, and when the positioning method is switched to the second positioning method, stops the automatic run (stops the work vehicle 10) or prohibits the start of the automatic run.

Further, the automatic run system 1, when the work vehicle 10 is ready for the automatic run by the first positioning method, and when the positioning method is switched to the second positioning method, prohibits the automatic run when the given condition is met. Concerning the given condition, the automatic run system 1 when the distance difference in the self-recognized position of the work vehicle 10 between before and after the change in positioning method is more than or equal to the threshold value, for example, prohibits the automatic run. Also, the automatic run system 1, when the positioning method is not restored before the given time elapses after the positioning method is switched, prohibits the automatic run. Further, the automatic run system 1, when the distance difference is less than the threshold value, may permit the automatic run. Also, the automatic run system 1, until the given time elapses after the positioning method is switched, may permit the automatic run.

According to the above configuration; the automatic run system 1, when the work vehicle 10 is switched to the RTK method at the time of automatically running while performing the positioning by the DGNSS method, for example, can stop the work vehicle 10, thereby making it possible to prevent any unstable behavior caused by the shift of the vehicle 10's self-recognized work position. Thus, the deterioration in work accuracy can be suppressed.

The present invention is not limited to the above embodiment. As another embodiment of the present invention, the automatic run system 1 may mutually differentiate the automatic run's restricting process seen when the work vehicle 10 is ready for the automatic run by the first positioning method and when the positioning method is switched to the second positioning method which is higher in positioning than the first positioning method, and the automatic run's restricting process seen when the work vehicle 10 is ready for the automatic run by the second positioning method and when the positioning method is switched to the first positioning method which is lower in positioning accuracy than the second positioning method.

The vehicle control unit 11, when the work vehicle 10 is ready for the automatic run by the DGNSS method, and when the positioning method is switched to the RTK method, for example, prohibits the automatic run. In the case of the switching from the positioning method with the low positioning accuracy to the positioning method with the high positioning accuracy, the distance difference in the self-recognized position between before and after the switching of the positioning method tends to be large; thus, the vehicle control unit 11 prohibits (or stops) the automatic run.

In contrast, the vehicle control unit 11, when the work vehicle 10 is ready for the automatic run by the RTK method, and when the positioning method is switched to the DGNSS method, for example, permits the automatic run for the given time or at the given distance. Thus, in the case of the switching from the positioning method with the high positioning accuracy to the positioning method with the low positioning accuracy, the distance difference in the self-recognized position between before and after the switching of positioning method tends to be smaller; thus, the vehicle control unit 11 continues the automatic run. In this case, the vehicle control unit 11, when the positioning method fails to be switched to the RTK method after the work vehicle 10 is caused to automatically run for the given time or at the given distance, may prohibit the automatic run.

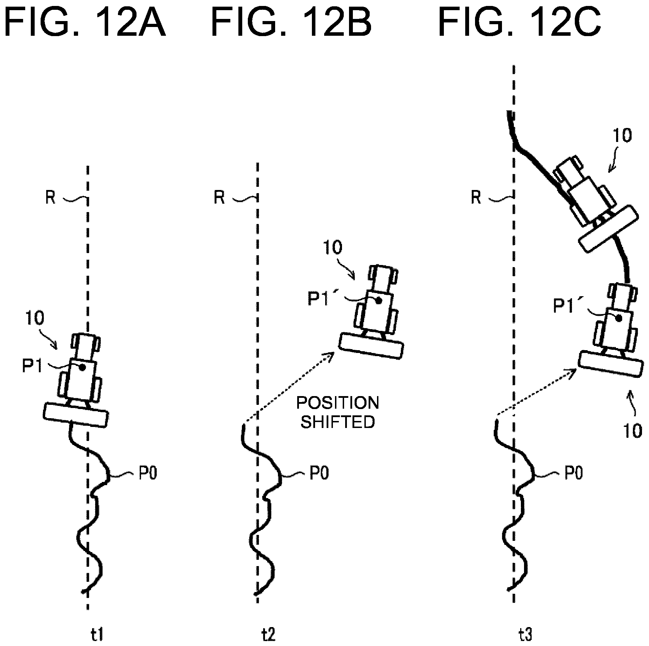

By the way, continuing the positioning process with the work vehicle 10 stopped causes a problem that the self-recognized position gradually shifts from the target route R. For example, as time elapses after the work vehicle 10 stops at a time t1 (see Fig. 12A), the positional shift (positional deviation) between the work vehicle 10's self-recognized position P1 and the target route R (straight ahead path) becomes larger (see Fig. 12B). Fig. 12B shows the work vehicle 10's self-recognized position P1' at a time t2. Then, at a time t3, when the automatic run of the work vehicle 10 is restarted, the steering wheel 137 is sharply turned to the left so as to adjust the self-recognized position P1' with the target route R, thus changing the run direction of the work vehicle 10. This causes the behavior of the work vehicle 10 to become unstable, thereby to deteriorate the work accuracy of the work vehicle 10.

Then, the vehicle control unit 11, when the work vehicle 10 that automatically runs by the given positioning method stops, and when the stop state continues for the given time, may prohibit the automatic run. Specifically, the vehicle control unit 11, when the work vehicle 10 stops during the automatic run by the DGNSS or RTK method or when the vehicle speed becomes less than the threshold value, starts measuring the time (timer counting). The vehicle control unit 11, when the measured time elapses the given time, prohibits the automatic run (stops the automatic run, or stops the work vehicle 10). Further, the vehicle control unit 11, when the operator has so operated as to restart the automatic run before the measured time elapses the given time, restarts the automatic run. In this case, the vehicle control unit 11 resets the measured time.

Further, the vehicle control unit 11, when the work vehicle 10 that automatically runs by the given positioning method stops and the stop state has continued for the given time, and when the distance difference between the work vehicle 10's position positioned at the time point of the work vehicle 10's being stopped (self-recognized position P1) and the work vehicle 10's position positioned at the time point of the elapse of the given time (self-recognized position P1') is less than the threshold value, prohibits the automatic run. For example, as shown in Fig. 9A, when the work vehicle 10 stops during the automatic run by the DGNSS method and the stop state has continued for the given time, and the distance difference L2 between the work vehicle 10's self-recognized position P1 at the stopping and the work vehicle 10's self-recognized position P1' at the time point of the elapse of the given time is equal to or more than the threshold value Lth, the run processing unit 111 prohibits the automatic run.

For example, as shown in Fig. 9B, when the work vehicle 10 stops during the automatic run by the DGNSS method and the stop state has continued for the given time, and the distance difference L2 between the work vehicle 10's self-recognized position P1 at the stopping and the work vehicle 10's self-recognized position P1' at the time point of the elapse of the given time is less than the threshold value Lth, the run processing unit 111 permits the automatic run. For example, the run processing unit 111, when the operator has so operated as to restart the automatic run, restarts the automatic run.

In this way, the vehicle control unit 11 may be so configured as to position the work vehicle 10's position by the given positioning method based on the satellite signal received from the satellite 20, to cause the work vehicle 10 automatically run based on the position information showing the work vehicle 10's position to be positioned, and to prohibit the automatic run when the work vehicle 10, which is ready for automatically running by the first positioning method, is stopped for the given time.

According to the above configuration; the automatic run can be prohibited (stopped), for example, when the work vehicle 10 which is ready for the automatic run is continuously stopped for the given time, thus making it possible to prevent any unstable behavior caused by the shift of the work vehicle 10's self-recognized position. Thus, the deterioration in work accuracy can be suppressed. In the above configuration, the vehicle control unit 11 does not have to have the configuration of switching the positioning method.

The automatic run system of the present invention may be configured with the work vehicle 10 alone, or may be so configured as to be provided with each of the processing units included in the vehicle control unit 11. Further, the automatic run system may be mounted on the work vehicle 10 or outside of the work vehicle 10, such as the operation terminal (tablet terminal, smartphone and the like).

### REFERENCE SIGNS LIST

1: automatic run system
10: work vehicle
20: satellite
11: vehicle control unit
16: positioning unit
17: operation unit
20: satellite
111: run processing unit
112: reception processing unit
161: positioning control unit
181: positioning processing unit
182: switch processing unit
F: farm field
Lth: threshold value
L2: distance difference
P1: self-recognized position
P1': self-recognized position

## Claims

1. An automatic run method comprising:
positioning a position of a work vehicle by a given positioning method based on a satellite signal received from a satellite;
causing the work vehicle to automatically run based on position information showing the work vehicle's positioned position; and
making the automatic run prohibitable, when the work vehicle is ready for the automatic run by a first positioning method, and when the positioning method is switched to a second positioning method which is different in positioning accuracy from the first positioning method.

2. The automatic run method according to claim 1, wherein
the automatic run is prohibited, when the positioning method is switched from the first positioning method to the second positioning method, and when a distance difference between the work vehicle's position positioned by the first positioning method and the work vehicle's position positioned by the second positioning method is more than or equal to a threshold value.

3. The automatic run method according to claim 2, wherein
the automatic run is permitted, when the positioning method is switched from the first positioning method to the second positioning method, and when the distance difference is less than the threshold value.

4. The automatic run method according to claim 1, wherein
the automatic run is permitted until a given time elapses after the positioning method is switched from the first positioning method to the second positioning method.

5. The automatic run method according to claim 4, wherein
the automatic run is permitted when the positioning method is switched from the second positioning method to the first positioning method before the given time elapses after the positioning method is switched from the first positioning method to the second positioning method.

6. The automatic run method according to claim 4 or 5, wherein
the automatic run is prohibited when the positioning method fails to be switched from the second positioning method to the first positioning method before the given time elapses after the positioning method is switched from the first positioning method to the second positioning method.

7. The automatic run method according to any one of claims 1 to 6, further comprising:
receiving an operation to select the positioning method.

8. The automatic run method according to any one of claims 1 to 7, further comprising:
making the automatic run prohibitable when the work vehicle which automatically runs by the first positioning method stops, and a state of the stop continues for a given time.

9. The automatic run method according to any one of claims 1 to 7, further comprising:
prohibiting the automatic run, when the work vehicle which automatically runs by the first positioning method stops, and a state of the stop continues for a given time, and when a distance difference between the work vehicle's position positioned at a time point when the work vehicle stopped and the work vehicle's position positioned at a time point of an elapse of the given time is more than a threshold value.

10. An automatic run system comprising:
a positioning processing unit for positioning a position of a work vehicle by a given positioning method based on a satellite signal received from a satellite; and
a run processing unit for causing the work vehicle to automatically run based on position information showing the work vehicle's position positioned by the positioning processing unit, wherein
the run processing unit is capable of prohibiting the automatic run, when the work vehicle is ready for the automatic run by a first positioning method, and when the positioning method is switched to a second positioning method which is different in positioning accuracy from the first positioning method.

11. An automatic run program for causing one or more processors to execute operations comprising:
positioning a position of a work vehicle by a given positioning method based on a satellite signal received from a satellite;
causing the work vehicle to automatically run based on position information showing the work vehicle's positioned position; and
making the automatic run prohibitable, when the work vehicle is ready for the automatic run by a first positioning method, and when the positioning method is switched to a second positioning method which is different in positioning accuracy from the first positioning method.
